# EUROPEAN PATENT SPECIFICATION

(11) **EP 2 518 028 B1**
(45) Date of publication and mention of the grant of the patent: **10.08.2016**
(21) Application number: 12165644.1
(22) Date of filing: 26.04.2012
(51) Int. Cl.: C03C 3/21, C03B 5/167

(54) **Method for manufacturing glass, method for manufacturing glass material for press molding, and method for manufacturing optical element**
Verfahren zur Glasherstellung, Verfahren zur Herstellung von Glasmaterial zum Druckformen und Verfahren zum Herstellen eines optischen Elements
Procédé de fabrication de verre, procédé de fabrication d'un matériau de verre pour moulage à la presse et procédé de fabrication d'un élément optique

(30) Priority: 28.04.2011 JP 2011100838; 24.02.2012 JP 2012038779
(43) Date of publication of application: 31.10.2012
(73) Proprietor: HOYA CORPORATION, Shinjuku-ku Tokyo 161-8525 (JP)
(72) Inventor: Fujiwara, Yasuhiro, Tokyo, 161-8525 (JP)
(74) Representative: Adam, Holger

(56) References cited:
- EP-A2- 1 568 665
- US-A- 3 242 060
- US-A1- 2005 217 317
- US-A1- 2010 273 633
- US-B1- 6 629 437

## Description

### [Technical Field]

The present invention relates to a method for manufacturing glass. More particularly, the present invention relates to a method for manufacturing a glass comprising components tending to undergo valence changes in the molten glass while inhibiting coloration. The present invention further relates to a method for manufacturing a glass material for press molding and to a method for manufacturing an optical element employing glass produced by the method of the present invention.

### [Background Art]

A crucible made of a noble metal with good anticorrosive properties with respect to the molten glass is employed to manufacture a high-quality glass by melting glass starting materials,.

Patent Reference 1 discloses a technique of manufacturing a display substrate comprised of a SiO₂ - Al₂O₃ based glass, in which parts coming into contact with the glass during manufacturing are made of a platinum-based material. In Patent Reference 1, platinum foreign material that mixes in while melting the glass appears as protrusions on the unpolished surface of the glass substrate. When wiring is formed on the glass substrate, these protrusions sever the lines and cause short-circuiting. Focusing on this problem, attempts have been made to prevent protrusions due to platinum foreign material on the surface of the glass substrate by applying a reverse voltage from the exterior to eliminate the electromotive force caused by contact between the molten glass and the platinum-based material.

In Patent Reference 2, electrodes are positioned within the molten glass and a current is caused to flow. This causes bubbles of oxygen gas to form at the anode. It also causes noble metals, such as a platinum component of the vessel that has melted into the glass, to precipitate at the cathode, both improving the clarifying effect and recovering noble metals.

[Patent Reference 1] Japanese Unexamined Patent Publication (KOKAI) No. 2005-60215
[Patent Reference 2] Japanese Unexamined Patent Publication (KOKAI) No. 2010-53004

### [Summary of the Invention]

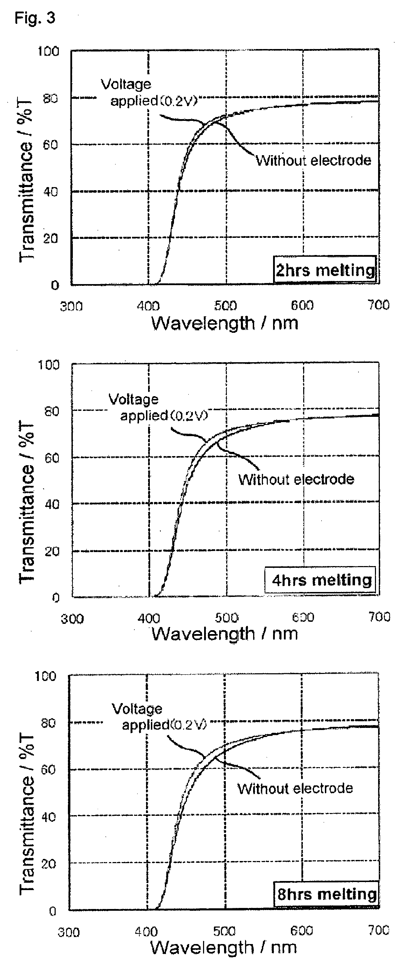

Paragraph 0039 in Patent Reference 1 states that, "When there are spots at which electromotive forces are generated by contact between platinum group elements and alloys or platinum group elements and the molten glass, and a reverse potential is applied at those spots (for example, as shown in Figure 3, when a reverse potential is applied to stirrer tube 30 to suppress the electromotive force generated in the high-temperature melt at gaps between stirrer 31 and stirrer tube 30 in the stirring vessel), it is possible to effectively inhibit the generation of platinum group element inclusion." Paragraph 0049 states, "First, a starting material batch that had been blended to obtain the glass composition indicated in the table was melted in a continuous melt furnace equipped with a stirrer tube and stirrer employing a platinum alloy. Next, glass substrates 0.7 mm in thickness were molded by the overflow downdraw method and cut to a size of 360 x 460 mm." Paragraph 0050 states that, "A reverse potential was applied to the stirrer tube in the stirring vessel for Sample Nos. 8 to 10." Thus, the stirrer and the stirrer tube were both made of an identical material in the form of a platinum alloy. When the stirrer and the stirrer tube are thought of as electrodes, a voltage was applied between electrodes comprised of an identical material in Patent Reference 1. When electrodes comprised of an identical material were brought into contact with the molten glass, the two electrodes adopted equal potentials. However, were a voltage from the exterior to be applied between these electrodes, ionization of one of the electrodes would necessarily be promoted. That is, the method of Patent Reference 1 cannot prevent the mixing of ionized electrode components into the glass, no matter what orientation or intensity of voltage is applied.

In the method described in Patent Reference 2, it is clear that a current is made to flow in (electricity is run through) the molten glass. Thus, this method cannot prevent the mixing of ionized electrode components into the glass, either.

The technique of using a crucible with good anticorrosive properties that is made of platinum or the like to melt the glass starting materials is also employed in the manufacturing of optical glass. In recent years, in response to more compact and more highly functional optical systems, the demand for high refractive index glasses has been increasing. Large quantities of high refractive index components such as Bi, Ti, Nb, and W are incorporated to obtain high refractive index glasses.

However, when such high refractive index glasses are melted in a crucible of a noble metal such as platinum, there are problems in that the glass develops coloration and transmittance in the visible short wavelength region decreases. The causes of coloration are thought to be as follows. The high refractive index components that are contained in a high refractive index glass tend to react with noble metals such as platinum in the glass melt. Thus, the crucible made of noble metal is corroded (oxidized) by the molten glass, the noble metal ions produced by oxidation of the noble metal melt into the glass, and the noble metal ions that have melted in absorb visible light. Accordingly, the present inventors employed the electrodes and crucible comprised of platinum parts indicated in the comparative examples to melt the high refractive index glass containing the above high refractive index components based on the method described in Patent References 1 and 2, and examined whether or not a coloration-inhibiting effect was produced by preventing the blending in of noble metal ions. However, coloration was found to become much more pronounced.

The object of the present invention is to provide a method for manufacturing glass that solves the above problems and permits the stable production of a high-quality, high refractive index optical glass with little coloration, and methods for manufacturing a glass material for press molding and an optical element from the glass produced by that method.

The present invention is as set forth below.
[1] A method for manufacturing glass containing one or more components from among Bi³⁺, Ti⁴⁺ , Nb⁵⁺, and W⁶⁺, comprising melting glass starting materials, characterized in that a molten glass is contained in a container having a surface coming into contact with the molten glass that is made of a noble metal or a noble metal alloy, the molten glass is brought into contact with an electrode, a potential is applied so that the electrode serves as an anode and the surface of the container coming into contact with the molten glass serves as a cathode, at least the surface of the electrode coming into contact with the molten glass is comprised of a noble metal or a noble metal alloy having a standard electrode potential greater than the standard electrode potential of the noble metal or noble metal alloy of the surface of the container, and a voltage is applied between the cathode and the anode, with the value of the potential at which the current flowing between the cathode and anode essentially goes to zero as the upper limit thereof, to inhibit corrosion of the surface of the container coming into contact with the molten glass.
[2] The method for manufacturing glass according to [1], wherein the voltage is applied so that the current flowing between the cathode and anode essentially goes to zero.
[3] The method for manufacturing glass according to [2], wherein the voltage is applied so that the current density, at the cathode, of the current flowing between the cathode and the anode becomes equal to or lower than 100 mA/cm².
[4] The method for manufacturing glass according to any one of [1] to [3], wherein the container is at least one from among a melting vessel for melting glass starting materials to prepare molten glass, a clarifying vessel for clarifying molten glass, and an operating vessel for homogenizing the clarified molten glass.
[5] The method for manufacturing glass according to any one of [1] to [4], wherein the total content of Bi³⁺, Ti⁴⁺ , Nb⁵⁺, and W⁶⁺ in the glass is equal to or greater than 10 cation %.
[6] The method for manufacturing glass according to any one of [1] to [5], wherein the surface of the container coming into contact with the molten glass is made of platinum or a platinum alloy, and the surface of the electrode constituting the anode that comes into contact with the molten glass is made of gold or a gold alloy.
[7] A method for manufacturing a glass material for press molding, comprising manufacturing glass by the method described in any one of [1] to [6], and manufacturing a glass material for press molding by using the glass obtained.
[8] A method for manufacturing an optical element, comprising manufacturing glass by the method described in any one of [1] to [6], and manufacturing an optical element by using the glass obtained.

The present invention provides a method for manufacturing glass permitting the stable production of high-quality glass with little coloration. The present invention further provides methods of manufacturing a glass material for press molding and of manufacturing an optical element from the glass prepared by the above method.

### [Brief Description of the Drawings]

[Figure 1] Schematically shows the vertical cross-section of a cell prepared in Embodiment 1.
[Figure 2] Shows the relation between the voltage applied and the current in glasses 1 and 2 in Embodiment 1.
[Figure 3] Shows the results of transmittance measurement in the glasses obtained in the various melting tests (with melt holding times of 2, 4, and 8 hours) conducted on Glass 1 in Embodiment 2.
[Figure 4] Shows the results of transmittance measurement in the glass obtained in the various melting tests (with and without the application of a voltage) conducted on Glass 2 in Embodiment 2.
[Figure 5] Shows a photograph of the glass melt immediately following the end of the application of voltage and the results of transmittance measurement in Glass 1 with variation of the applied voltage conditions (left: +0.46 V; right: +0.21 V) in Comparative Example 1.
[Figure 6] Shows the results of transmittance measurement in Glass 1 when the applied voltage was varied in Embodiment 3 and Comparative Example 2.
[Figure 7] Shows a photograph of the external appearance of Glass 1 obtained in Comparative Example 2.
[Figure 8] Shows the relation between the platinum (Pt) concentration and the gold (Au) concentration when the applied voltage was varied in Embodiment 2.

### [Modes of Carrying Out the Invention]

The present invention is a method for manufacturing glass containing one or more components from among Bi³⁺, Ti⁴⁺, Nb⁵⁺, and W⁶⁺. This manufacturing method is characterized in that the molten glass is contained in a container in which the surface coming into contact with the molten glass is made of a noble metal or a noble metal alloy, the molten glass is brought into contact with an electrode, a potential is applied so that the electrode serves as an anode and the surface of the container coming into contact with the molten glass serves as a cathode, at least the surface of the electrode coming into contact with the molten glass is comprised of a noble metal or a noble metal alloy having a standard electrode potential greater than the standard electrode potential of the noble metal or noble metal alloy of the surface of the container, and a voltage is applied between the cathode and the anode, with the value of the potential at which the current flowing between the cathode and anode essentially goes to zero as the upper limit thereof, to inhibit corrosion of the surface of the container coming into contact with the molten glass.

In the present invention, the term "standard electrode potential" means the standard electrode potential in the above molten glass.

Further, the term "inhibiting corrosion of the surface of the container coming into contact with the molten glass" means less corrosion than a reference in the form of the corrosion of the surface of the container coming into contact with the molten glass in a state in which the anode does not come into contact with the molten glass.

The example of a container comprised overall of a single noble metal or noble metal alloy and an anode comprised of a single noble metal or noble metal alloy will be given below to describe the present invention in detail. The description set forth below can be similarly applied in the case where the container is not comprised overall of a single noble metal or noble metal alloy and in the case where the anode is not comprised of a single noble metal or noble metal alloy, because these cases are the case where the container and the anode are comprised of composite materials.

Unless specifically stated otherwise, noble metals and noble metal alloys are collectively referred to as noble metals hereinafter.

Molten glass is contained in a container made of a noble metal. An electrode comprised of a noble metal exhibiting a standard electrode potential that is greater than that of the noble metal of the container is brought into contact with the molten glass. A direct current electric circuit is configured with the container serving as a cathode and the above electrode serving as an anode, and a voltage is applied. When the electrode comprised of a noble metal exhibiting a standard electrode potential greater than that of the noble metal of the container is brought into contact with the molten glass contained in the container made of a noble metal, and the container and the electrode are connected to an external circuit without applying a voltage, the difference in the standard electrode potentials of the container and the electrode causes a current to flow from the electrode to the container. As a result, oxidation of the container component occurs at the junction of contact between the container and the molten glass.

Thus, a direct current electric circuit is constituted with the container as the cathode and the electrode as the anode and a voltage is applied from the exterior. For example, the direct current electric circuit is constituted as plus(+) terminal of direct current power source -> wire -> anode -> molten glass -> cathode (container) -> minus(-) terminal of direct current power source. The voltage can then be adjusted to prevent ionization on the noble metal container side of lower standard electrode potential and apply a voltage (defined here as ΔP) between the anode and cathode to eliminate the current generated due to the difference in the standard electrode potential between the anode and the container (cathode). Here, when the potential of the anode relative to the cathode is made greater than ΔP, cationic components in the glass are reduced and anions of oxygen and the like in the molten glass are oxidized to oxygen atoms at the junction where the container comes into contact with the molten glass. One or more of the components Bi³⁺, Ti⁴⁺, Nb⁵⁺, and W⁶⁺ contained in the molten glass are reduced, and coloration of the glass increases sharply. Thus, the voltage that is applied between the anode and the cathode is adjusted to less than or equal to ΔP.

Rendering the voltage applied between the anode and the cathode equal to ΔP essentially brings the current flowing between the cathode and the anode to zero, none of the components Bi³⁺, Ti⁴⁺, Nb⁵⁺, and W⁶⁺ is reduced, and the ionization (corrosion) of the container serving as the cathode is inhibited. Accordingly, in terms of inhibiting corrosion of the container serving as the cathode while preventing increased coloration due to the reduction of glass components in the form of Bi³⁺ , Ti⁴⁺ , Nb⁵⁺, and W⁶⁺ and increased coloration due to ionization of the anode, it is desirable to apply a voltage between the cathode and anode so that the current flowing between the cathode and anode essentially goes to zero.

When selecting materials for the anode and the container serving as the cathode, it suffices to make selections such that the standard electrode potential of the material constituting the anode in the molten glass is greater than the standard electrode potential of the material of the container (cathode) in the molten glass. When applying the above voltage, even a noble metal of high standard electrode potential will sometimes be prone to ionization at the anode, and partially dissolve out into the glass melt. Thus, it is desirable to select an anode material such that the ionized anode does not negatively impact the transmittance characteristics of the glass.

The difference in potential resulting from the difference in the standard electrode potentials of the two materials can be measured by immersing the material serving as the anode and the material serving as the cathode in a melt of the glass to be manufactured, desirably a glass melt of the same temperature as the melting temperature (fusion temperature) during the manufacturing of the glass, and measuring the potential difference between the materials. A potential can then be applied to eliminate the difference in potential generated in this manner, and the potential ΔP at which the current essentially stops flowing can be measured. ΔP is approximately the same as the above standard electrode potential difference, but there are cases where the apparent ΔP varies over time due to the glass temperature and viscosity, and the transference number of ions determined by the composition. Thus, in actual anticorrosion treatment, ΔP will sometimes not necessarily be identical to the reference electrode potential difference set forth above. Accordingly, the applied voltage is desirably kept to a value at which current essentially does not flow by monitoring the current. It suffices to make the material on the high potential side the anode material and the material on the low potential side the cathode material.

Immersing the two materials in a melt of the glass that is to be manufactured and measuring the polarity and voltage generated between the materials permits the easy and suitable selection of an anode material and cathode material and makes it possible to determine the maximum value of ΔP of the voltage to be applied between the anode and cathode. In the measurement of the potential difference and polarity, there are methods such as that of fabricating the container from one of the two materials, placing the molten glass in the container, and immersing an electrode fabricated from the other material in the molten glass, and the method of placing the molten glass in a container, such as a an insulative container, and immersing electrodes fabricated from the two types of materials in the molten glass.

In selecting the electrode materials, it is desirable for the materials to have adequate heat resistance to withstand the elevated temperatures during melting of the glass.

With regard to the standard electrode potential of the noble metal in the molten glass, that is, the glass melt, the value of the standard electrode potential of the noble metal in water can be considered. For example, the standard electrode potentials of various materials in aqueous solutions given in the Electrochemical Handbook (4th Ed., January 25, 1985, pub. by Maruzen) are as follows:

Au +1.50 V (electrode reaction: Au³⁺ + 3e⁻ = Au (s)),
Au +1.68 V (electrode reaction: Au⁺ + e⁻ = Au (s)),
Pt +1.32 V (electrode reaction: Pt²⁺ 2e⁻ = Pt (s)),
Pd +0.915 V (electrode reaction: Pd²⁺ + 2 e⁻ = Pd),
Ir +1.16 V (electrode reaction: Ir³⁺ + 3e⁻ = Ir (s)),
Ag +0.7991 V (electrode reaction: Ag⁺ e⁻ = Ag(s)),
Rh +0.758 V (electrode reaction: Rh³⁺ + 3e⁻ = Rh(s)),
Ru +0.46 V (electrode reaction: Ru²⁺ + 2e⁻ = Ru(s)).

Here, (s) indicates a solid. In cases such as that of Au, where multiple types of electrode reactions exist for a solid metal and the standard electrode potentials differ for the various electrode reactions, when the noble metal is employed as the anode, it suffices to adopt the lowest potential among the multiple standard electrode potentials as the standard electrode potential. When employed as the cathode, it suffices to adopt the highest potential among the multiple standard electrode potentials as the standard electrode potential. However, the standard electrode potential in water (or in an aqueous solution) can serve as a yardstick when selecting a material for the container (cathode) and the anode. It is desirable to confirm the polarity and potential difference between the two materials by immersing the two materials in a melt of the glass that is to be manufactured, as set forth above, in order to make a more reliable selection.

### <Glasses containing any of components Bi³⁺ , Ti⁴⁺, Nb⁵⁺, and W⁶⁺>

Among the components contained in a glass, Bi³⁺, Ti⁴⁺ , Nb⁵⁺, and W⁶⁺ will be the high refractive index components. These high refractive index components tend to undergo a change in valence in a glass melt. Problems such as the following occur when melting such glasses by the method of Patent Reference 1. Since the anode and cathode are made of the same material (platinum), the voltage that is applied to inhibit corrosion of the cathode wrests electrons from the various Bi, Ti, Nb, and W ions contained in the molten glass around the anode, and ion reduction and coloration occur.

In the method of Patent Reference 2, a current flows through the molten glass. Thus, when melting a high refractive index glass, reduction and coloration occur due to the high refractive index components.

Among glasses containing components from among Bi³⁺, Ti⁴⁺ , Nb⁵⁺, and W⁶⁺, high refractive index glasses contain large quantities of high refractive index components. Thus, coloration due to the reduction of high refractive index components is much more intense than coloration resulting from the mixing in of noble metal ions. Such coloration increases sharply when the applied voltage exceeds ΔP.

The application of the voltage between the anode and cathode is not a specific limitation. However, by lowering the applied voltage to less than or equal to ΔP, it is possible to both inhibit pronounced ionization of the material constituting the anode and coloration due to ionization of the anode material.

The present invention is particularly suited to the manufacturing of such high refractive index glasses.

The above glass is one in which the total content of Bi³⁺, Ti⁴⁺, Nb⁵⁺, and W⁶⁺ is 10% or greater in units of cation %. As the total content of Bi³⁺, Ti⁴⁺, Nb⁵⁺, and W⁶⁺ increases, the problems of corrosion of the melt container and coloration due to the reduction of Bi³⁺, Ti⁴⁺, Nb⁵⁺, and W⁶⁺ become pronounced. Thus, the present invention is well suited to the manufacturing of glasses with a total content of Bi³⁺, Ti⁴⁺ , Nb⁵⁺, and W⁶⁺ of 20 cation % or greater, better suited to the manufacturing of glasses in which this total content is 30 cation % or greater, still better suited to the manufacturing of glasses in which this total content is 40 cation % or greater, and yet still better suited to the manufacturing of glasses in which this total content is 50 cation % or greater. The upper limit of the total content of Bi³⁺, Ti⁴⁺, Nb⁵⁺, and W⁶⁺ is not specifically limited other than that it be within the range within which vitrification is possible.

Cations of Pb, As, Cd, Te, TI, and Se all have a negative impact on the environment, and are thus desirably not incorporated or added to the above glass. Cations of V, Cr, Mn, Fe, Co, Ni, Cu, Pr, Nd, Eu, Tb, Ho, and Er all either produce coloration in the glass or generate fluorescence when irradiated with UV light, and are thus desirably not incorporated or added. The phrase "not incorporated or added" does not exclude mixing in as impurities that are derived from the glass melting step or that are contained in glass starting materials.

The present invention is suited to the manufacturing of optical glasses with refractive indexes nd of 1.8 or above, well suited to the manufacturing of optical glasses with refractive indexes nd of 1.9 or above, better suited to the manufacturing of optical glasses with refractive indexes nd of 1.95 or above, still better suited to the manufacturing of optical glasses with refractive indexes nd of 2.0 or above, and even better suited to the manufacturing of optical glasses with refractive indexes nd of 2.07 or above. Specific examples are given below.

(1) Phosphoric acid-containing glass. A P⁵⁺ content of 10 cation % or more can serve as a yardstick. Examples of such glasses are oxide glasses with a P⁵⁺ content of 10 cation % or greater and a Bi³⁺ content of 10 cation % or greater.

An example of the above phosphoric acid-containing glass is an oxide glass containing, denoted as cation percentages:
P⁵⁺ 14 to 36%,
Bi³⁺ 12 to 35%,
Nb⁵⁺ 10 to 34%,
Ti⁴⁺ 0 to 20%, and
W⁶⁺ 0 to 20%;
wherein the total content of Bi³⁺, Ti⁴⁺, Nb⁵⁺, and W⁶⁺ is 50% or greater, the refractive index nd is 2.02 or greater, and the Abbé number vd is 19 or less.

The above optical glass is an oxide glass, with O²⁻ as the main anionic component. An O²⁻ content of 90 to 100 anion % can serve as a yardstick. When the O²⁻ content falls within this range, it is possible to incorporate other anionic components, such as F⁻, Cl⁻, Br⁻, I⁻, S²⁻, Se²⁻, N³⁻, NO₃⁻, and SO₄²⁻. In that case, the total content of F⁻, Cl⁻, Br⁻, I⁻, S²⁻, Se²⁻, N³⁻, NO₃⁻, and SO₄²⁻ can be, for example 0 to 10 anion %. The O²⁻ content can also be made 100 anion %.

Cationic components will be described next. Hereinafter, unless specifically stated otherwise, the content and total content of cationic components will be denoted as cation percentages.

P⁵⁺ is a glass network-forming component that is an essential component in the above optical glass. It has the effect of enhancing the thermal stability of the glass and serves to lower the liquidus temperature, raise the viscosity at the liquidus temperature, and facilitate the production of a high-quality optical glass. When the content of P⁵⁺ is less than 14%, it becomes difficult to achieve these effects. When the content of P⁵⁺ exceeds 36%, the refractive index drops and the tendency of the glass to crystallize increases. Thus, the P⁵⁺ content is specified as 14 to 36%.

Bi³⁺ is an essential component for obtaining a high refractive index and high dispersion glass. The incorporation of a suitable quantity functions to enhance the stability of the glass. It also serves to change the polarity of the glass. When the content of Bi³⁺ is less than 12%, it becomes difficult to achieve these effects. When the content of Bi³⁺ exceeds 35%, the thermal stability decreases, the liquidus temperature rises, and the viscosity at the liquidus temperature tends to decrease, which are undesirable in terms of obtaining a high-quality optical glass. The glass develops a brown coloration, and in terms of spectral transmittance characteristics, the wavelength of the absorption edge tends to increase. Accordingly, the Bi³⁺ content is specified as 12 to 35%.

Nb⁵⁺, a component that functions to raise the refractive index and dispersion of the glass, is an essential component that functions to maintain the thermal stability of the glass in the presence of Bi³⁺ and Ti⁴⁺. It also serves to increase the chemical durability of the glass and enhance the mechanical strength of the glass. When the content of Nb⁵⁺ is less than 10%, it becomes difficult to obtain a high refractive index and high dispersion characteristics while maintaining thermal stability. When the content of Nb⁵⁺ exceeds 34%, the thermal stability of the glass drops, the liquidus temperature rises sharply, and the viscosity at the liquidus temperature decreases, making it difficult to produce a high-quality optical glass. Although not to the extent of Bi³⁺ , Ti⁴⁺, and W⁶⁺, in terms of spectral transmittance characteristics, the wavelength of the absorption edge tends to increase somewhat. Accordingly, the content of Nb⁵⁺ is specified as 10 to 34%.

Ti⁴⁺ , a component that functions to raise the refractive index and dispersion of the glass, is an optional component that functions to maintain the thermal stability of the glass in the presence of Bi³⁺ and Nb⁵⁺. Accordingly, the content thereof can be 0%. It also functions to increase the chemical durability of the glass and enhance the mechanical strength of the glass. When the content of Ti⁴⁺ exceeds 20%, the thermal stability of the glass decreases, crystallization tends to increase, the liquidus temperature rises sharply, and the viscosity at the liquidus temperature drops, making it difficult to produce a high-quality optical glass. Further, in terms of spectral transmittance characteristics, the wavelength of the absorption edge tends to increase and the glass tends to develop a brown coloration. Accordingly, the content of Ti⁴⁺ is specified as 0 to 20%.

W⁶⁺ is an optional component that functions to raise the refractive index and dispersion of the glass, increase the chemical durability of the glass, and enhance the mechanical strength of the glass. Accordingly, the content can be 0%. When the content of W⁶⁺ exceeds 22%, the thermal stability of the glass decreases, the liquidus temperature tends to rise, and the viscosity at the liquidus temperature drops, making it difficult to obtain a high-quality optical glass. Further, the glass develops a bluish-gray coloration, and in terms of spectral transmittance characteristics, the wavelength of the absorption edge tends to increase. Accordingly, the content of W⁶⁺ is specified as 0 to 22%. The lower limit of the W⁶⁺ content is desirably 2%.

To obtain a desired high refractive index and high dispersion glass, in addition to keeping the contents of each of Bi³⁺, Nb⁵⁺, Ti⁴⁺ and W⁶⁺ within the ranges set forth above, the total content of Bi³⁺, Nb⁵⁺, Ti⁴⁺ and W⁶⁺ is specified as 50% or greater. The upper limit of the total content of Bi³⁺, Nb⁵⁺, Ti⁴⁺ and W⁶⁺ is desirably 90%, preferably 80%, and more preferably, 70%.

Li⁺, Na⁺, K⁺, B³⁺, Si⁴⁺, Ba²⁺, Sr²⁺, Ca²⁺, Mg²⁺, Zn²⁺, Al³⁺, and the like can be incorporated as optional components. It is also possible to add clarifying agents such as Sb₂O₃ and SnO₂. Various salts comprised of anions such as NO₃⁻, CO₃⁻, SO₄²⁻, F⁻, Cl⁻, Br⁻, and I⁻ and cations in the form of their counter ions can also be added.

Sb₂O₃ is desirable among the clarifying agents. When employing Sb₂O₃, the quantity of Sb₂O₃ that is added as a weight ratio based on the total amount of the glass components desirably falls within a range of 0 to 10,000 ppm. The term "quantity added based on the total amount of the glass components as a weight ratio" is the quantity that is added denoted as a proportion based on the weight of the glass components. In addition to having a clarifying effect, Sb₂O₃ functions to keep the above-described refractive index raising components in an oxidized state in the glass melt and functions to stabilize the state of oxidation. However, when the quantity added based on the total amount of the glass components exceeds 10,000 ppm, the optical absorption of Sb itself tends to cause the glass to develop coloration. From the perspective of improving the transmittance characteristics of the glass, the upper limit of the quantity of Sb₂O₃ added based on the total amount of the glass components is desirably 5,000 ppm, preferably 2,000 ppm, more preferably 1,100 ppm, still more preferably 900 ppm, and yet still more preferably, 600 ppm. The lower limit is desirably 100 ppm, preferably 200 ppm, and more preferably, 300 ppm. Since Sb is an additive, the quantity added is denoted as an oxide-converted value, in contrast to glass components.

Cations of Pb, As, Cd, Te, Tl, and Se all present risks of increased environmental burden, and are thus desirably not incorporated or added to the above optical glass. Cations of V, Cr, Mn, Fe, Co, Ni, Cu, Pr, Nd, Eu, Tb, Ho, and Er all impart color to the glass and produce fluorescence when irradiated with UV light, and are thus desirably not incorporated or added to the above optical glass. However, the term "not incorporated or added" does not exclude mixing in as an impurity derived from the glass melting step or derived from the starting materials.

### [The refractive index and Abbé number]

The refractive index nd of the optical glass is 2.02 or higher and the Abbé number vd is 19 or lower. Thus, the optical glass has an ultra high refractive index and high dispersion characteristics. Thus, it is suitable as a material for optical elements constituting high zoom ratio, wide-angle compact optical systems.

(2) Boric acid-containing glasses. A B³⁺ content of 10 cation % or higher can be thought of as a yardstick. An oxide glass with a B³⁺ content of 5 to 50 cation % and a Bi³⁺ content of 10 cation % or higher is such a glass. The upper limit of the Bi³⁺ content is not specifically limited so long as vitrification is possible. An upper content limit of 80 cation % can be thought of as a yardstick.

A desirable boric acid-containing glass, denoted as cationic percentages, comprises:
Bi³⁺ 30 to 70%;
B³⁺ 5 to 50%;
Si⁴⁺ 0.5 to 50%;
Al³⁺ 1 to 20%;
Ca²⁺ 0 to 20%;
Mg²⁺ 0 to 15%; and
Sr²⁺ 0 to 10%.

The above glass composition will be described below.

Bi³⁺ is a component that functions to raise both the refractive index and dispersion. However, the incorporation of an excessive quantity reduces stability and becomes a light-scattering source by precipitating as a colloid in the glass. Thus, the content thereof is specified as 30 to 70%.

B³⁺ is a component that functions as a network former, enhancing the stability of the glass and its melting property. However, when incorporated in excessive quantity, it lowers the refractive index. Thus, the content is specified as 5 to 50%.

Si⁴⁺ also functions as a network former, and serves to increase the stability and chemical durability of the glass. However, when incorporated in excessive quantity, the refractive index and meltability decrease and the glass transition temperature increases. Thus, the content thereof is specified as 0.5 to 50%.

Al³⁺ functions to increase the stability of the glass and enhance chemical durability. However, when incorporated in excessive quantity, the stability, refractive index, and meltability decrease and the glass transition temperature rises. Thus, the content thereof is specified as 1 to 20%.

To maintain good stability, the cationic ratio of Al³⁺/Si⁴⁺ is desirably kept to 0.2 or higher, preferably 0.3 or higher. When the cation ratio is less than 0.2, the stability of the glass drops sharply. Additionally, to maintain good glass meltability, the cationic ratio Al³⁺/Si⁴⁺ is desirably kept to 5 or lower.

Ca²⁺, Mg²⁺, and Sr²⁺ function to enhance the stability of the glass in the presence of Al³⁺. They also function to enhance meltability and lower the glass transition temperature. However, when introduced in excessive quantity, the stability and the refractive index drop. Thus, the Ca²⁺ content is specified as 0 to 20%, the Mg²⁺ content as 0 to 15%, and the Sr²⁺ content as 0 to 10%.

To maintain the stability of the glass, the following limitations are desirable on the content of Ga³⁺, Ba²⁺, and Zn²⁺. Ga³⁺, Ba²⁺, and Zn²⁺ have relatively large molecular volumes. When cation components of such high molecular volume are incorporated into compositions comprising basic components in the form of Bi³⁺, B³⁺, Si⁴⁺, and Al³⁺, stability decreases. Accordingly, the Ga³⁺ content is desirably kept to 0 to 2%, preferably to 0 to 1 %. As set forth above, Ga³⁺ decreases stability, and is also an extremely expensive component. Thus, it is preferable not to incorporate Ga³⁺. The total content of Ba²⁺ and Zn²⁺ is desirable limited to 0 to 10%, preferably kept to within a range of 0 to 7%, more preferably kept to within a range of 0 to 5%, still more preferably kept to within a range of 0 to 3%, yet still more preferably kept to within a range of 0 to 1%, and most preferably, no Ba²⁺ or Zn²⁺ is incorporated.

Li⁺, Na⁺, and K⁺ can also be incorporated. Alkali metal components such as Li⁺, Na⁺, and K⁺ function to lower the glass transition temperature and enhance meltability. However, in addition to tending to decrease the stability of the glass, they tend to decrease chemical durability. Since alkali metal components exhibit volatility, they volatize from the surface of glass in a state of elevated temperature, causing variation in the refractive index and Abbé number and producing striae. Accordingly, the total content of Li⁺, Na⁺, and K⁺ is desirably 0 to 20 percent, preferably falling within a range of 0 to 15%, more preferably falling within a range of 0 to 12%, still more preferably falling within a range of 0 to 10%, and yet still more preferably, falling within a range of 0 to 8%. The individual ranges are desirably 0 to 20% for Li⁺, 0 to 15% for Na⁺, and 0 to 10% for K⁺; preferably 0 to 15% for Li⁺, 0 to 12% for Na⁺, and 0 to 8% for K⁺; more preferably 0 to 12% for Li⁺, 0 to 10% for Na⁺, and 0 to 5% for K⁺; still more preferably 0 to 10% for Li⁺, 0 to 7% for Na⁺, and 0 to 4% for K⁺; and yet still more preferably, 0 to 7% for Li⁺, 0 to 5% for Na⁺, and 0 to 2% for K⁺.

The glass transition temperature is low and meltability is adequate even when no alkali metal components are contained. Thus, it is unnecessary to add alkali metals. Accordingly, it is desirable not to incorporate any of Li⁺, Na⁺, and K⁺ from the perspective of further enhancing stability and chemical durability, stabilizing optical characteristics, and preventing striae.

La³⁺, Gd³⁺, and Y³⁺ can be incorporated. La³⁺, Gd³⁺, and Y³⁺ function both to raise the refractive index and enhance chemical durability. However, when incorporated in excessive quantities, they lower stability. The La³⁺ content is desirably kept to 0 to 8%, preferably 0 to 6%, more preferably 0 to 5%, and still more preferably, 0 to 4%. The Gd³⁺ content is desirably kept to 0 to 8%, preferably 0 to 6%, more preferably 0 to 5%, and still more preferably, 0 to 4%. The Y³⁺ content is desirably kept to 0 to 8%, preferably 0 to 6%, more preferably 0 to 5%, and still more preferably, 0 to 4%.

Since La³⁺, Gd³⁺, and Y³⁺ are all optional components, it is possible not to incorporate them. However, when priority is placed on further raising the refractive index and enhancing the chemical durability, the total content of La³⁺, Gd³⁺, and Y³⁺ is desirably 0.1 to 8%, preferably 0.5 to 6%, more preferably 1 to 5%, and still more preferably, 1 to 4%.

W⁶⁺, Ta⁵⁺, Nb⁵⁺, Zr⁴⁺, and Ti⁴⁺ can also be incorporated.

W⁶⁺ functions to raise the refractive index. However, when incorporated in excessive quantity, it lowers the stability of the glass. Thus, the content thereof is desirably kept to 0 to 8%, preferably 0 to 5%, and more preferably, 0 to 3%.

Ta³⁺ also functions to raise the refractive index. However, when incorporated in excessive quantity, it lowers stability. Thus the quantity thereof is desirably kept to 0 to 5%, preferably 0 to 4%, more preferably 0 to 3%, and still more preferably, is 0%.

Nb⁵⁺, Zr⁴⁺, and Ti⁴⁺ function to raise the refractive index, but raise the glass transition temperature more strongly than Bi³⁺. Accordingly, a rise in the glass transition temperature is unavoidable when incorporating these components to raise the refractive index while maintaining stability by increasing the amounts added. Accordingly, the Nb⁵⁺ content is desirably 0 to 8%, preferably falling within a range of 0 to 5%, more preferably falling within a range of 0 to 3%, and most preferably, none is incorporated at all. The Zr⁴⁺ content is desirably 0 to 8%, preferably falling within a range of 0 to 5%, more preferably falling within a range of 0 to 3%, and most preferably, none is incorporated at all. The Ti⁴⁺ content is desirably 0 to 10%, preferably falling within a range of 0 to 9%, more preferably falling within a range of 0 to 9%, still more preferably falling within a range of 0 to 8%, yet still more preferably falling within a range of 0 to 6%, and even more preferably, falling within a range of 0 to 4%.

Ga³⁺, In³⁺, Ge⁴⁺, P⁵⁺, Ce⁴⁺, and the like can be incorporated.

However, Ga³⁺, In³⁺, and Ge⁴⁺ are expensive components. If the glass can be imparted with desired properties and characteristics without incorporating these components, they need not be incorporated.

Since P⁵⁺ lowers the refractive index when incorporated in excessive quantity, the content thereof is desirably kept to 0 to 3%, preferably 0 to 2%, more preferably 0 to 1%, and most preferably, to 0%.

Ce⁴⁺ functions to inhibit the precipitation of Bi³⁺ as a colloid. However, when incorporated in excessive quantity, it causes the glass to develop coloration. Thus, the content thereof is desirably kept to 0 to 2%, preferably kept to 0 to 1%. There are glasses in which the above colloid tends not the precipitate even without the addition of Ce⁴⁺ and in which the addition of Ce⁴⁺ compromises the transmittance, presenting the risk of deterioration of the molding surfaces of the pressing mold. Thus, it is preferable not to incorporate Ce⁴⁺.

Pb⁴⁺, Te⁴⁺, Cd²⁺, Tl⁺, and Th⁴⁺ raise the refractive index, but are toxic. Thus, to reduce the burden on the environment, they are desirably not added or incorporated.

Additionally, Sb₂O₃ can be added as a clarifying agent. The quantity of Sb₂O₃ that is added, as a ratio based on the total amount of the glass components, desirably falls within a range of 0 to 1 weight %, preferably within a range of 0 to 0.5 weight %.

As₂O₃ exhibits a strong oxidizing effect and markedly deteriorates the molding surfaces of the mold. To prevent such deterioration, it is desirable not to add As₂O₃ to the glass.

In the above glass, the liquidus temperature is desirably 800°C or lower, preferably 780°C or lower, more preferably 760°C or lower, and still more preferably, 740°C or lower. There is no specific lower limit to the liquidus temperature. However, in terms of achieving desired optical characteristics, a lower limit of about 550°C or higher is desirable.

The above glass has high refractive index and high dispersion characteristics. Specifically, the refractive index nd is desirably 1.84 or higher, preferably 1.90 or higher, and more preferably, 1.95 or higher. The Abbé number vd is desirably 30 or lower, preferably 27.5 or lower, and more preferably, 25 or lower. There is no specific lower limit to the upper limit of the refractive index but it is desirably 2.2 or lower in terms of maintaining a low liquidus temperature. There is no specific lower limit to the Abbé number; however, it is desirably 10 or higher in terms of maintaining a low liquidus temperature.

The above glass has the property of softening at low temperature. Specifically, the glass transition temperature is desirably 500°C or lower, preferably 480°C or lower, more preferably 460°C or lower, still more preferably 440°C or lower, and most preferably, 420°C or lower. There is no specific lower limit to the glass transition temperature. However, in terms of maintaining the above refractive index, Abbé number, and liquidus temperature, the lower limit of the glass transition temperature is desirably set to 300°C. Since glass II has such a low glass transition temperature, it is suited to applications in which the glass material is heated and press molded to fabricate a molded glass article. When the glass transition temperature is low, press molding can be conducted at a relatively low heating temperature. Thus, deterioration and wear and tear of the pressing mold and the like can be reduced and prevented. In particular, the above glass is suited to applications in which multiple cycles of repeated molding are conducted while precisely maintaining the molding surfaces of the pressing mold, such as in precision press molding.

Further, from the perspective of broadening the range of electrode components that can be selected, particularly when employing gold, or a gold alloy, with a low melting point as an electrode, the melting temperature of the glass is desirably lower than the melting temperature of gold or the gold alloy. That is, The melting temperature Tₘₑₗₜ of the glass is lower than the melting point MP of the electrode material, and the temperature difference (MP - Tₘₑₗₜ) is desirably 10°C or greater, preferably 20°C or greater, preferably 30°C or greater, more preferably 50°C or greater, still more preferably 70°C or greater, yet still more preferably 100°C or greater, even more preferably 150°C or greater, yet even more preferably 200°C or greater, yet still even more preferably 300°C or greater, and most preferably, 400°C or greater. Keeping the melting temperature of the glass less than or equal to the liquidus temperature of the glass during the glass manufacturing period (for example, one hour or more, desirably 2 hours or more, preferably 4 hours or more) undesirably invites crystallization of the glass. Thus, the liquidus temperature of the glass is desirably 1,100°C, preferably 1,080°C or lower, more preferably 1,060°C or lower, still more preferably 1,040°C or lower, yet still more preferably 1,020°C or lower, even more preferably 1,000°C or lower, and yet even more preferably, 980°C or lower. The upper limit of the liquidus temperature of the glass is, in descending order of desirability, 970°C, 960°C, 940°C, 920°C, 900°C, 880°C, 860°C, 840°C, 800°C, 750°C, 700°C, and 650°C.

In the manufacturing method of the present invention, (i) a container made of a noble metal such as platinum (including platinum alloys) is employed, for example. Molten glass is contained in the container. (ii) Further, an electrode made of a noble metal exhibiting a higher standard electrode potential than the above noble metal, such as gold (including gold alloys), is brought into contact with the molten glass contained in the container. (iii) A voltage is then applied, with the container serving as a cathode and the electrode serving as an anode. (iv) In addition, the voltage is of a value that inhibits ionization (corrosion) of the platinum (platinum alloy) constituting the container, with the difference between the standard electrode potential of gold (gold alloy) and platinum (platinum alloy), that is, ΔP, serving as a yardstick for the upper limit thereof. In this manner, the voltage is desirably applied between the cathode and anode so that the current flowing between the cathode and the anode essentially goes to zero.

### (i) The container (cathode) made of a noble metal

The container in which the molten glass is stored is made of a noble metal of good heat resistance and corrosion resistance. The container can be configured such that the glass starting material is melted, clarified, and homogenized in a single vessel, or be configured such that a melting vessel in which the glass starting material is melted to prepare molten glass, a clarifying vessel in which the molten glass is clarified, and an operating vessel in which the molten glass that has been clarified is homogenized, are serially connected by pipes in the stated order. The pipes connecting the various vessels are also desirably made of a material with good heat and corrosion resistance that is electrically conductive. When the connecting pipes are made of an electrically conductive material, the multiple vessels that are connected are in an electrically short-circuited state. When materials of different standard electrode potentials are electrically short-circuited, current flows from the material of higher standard electrode potential to the material of lower standard electrode potential, which ends up promoting ionization of the material on the lower potential side. Thus, when electrically short-circuiting the different vessels and pipes, it is desirable for the various vessels and pipes to be made of materials of approximately identical standard electrode potentials, and preferable for them to be made of the same type of material. The type of noble metal is not specifically limited. However, a metal of good mechanical strength that does not soften or deform even when holding molten glass at elevated temperature and that deteriorates little due to the growth of crystal grain boundaries due to rising and falling temperatures is desirable. For example, the pipes and vessels are desirably made of platinum or a platinum alloy, iridium or an iridium alloy, palladium or a palladium alloy or the like.

The container that is paired with an electrode to apply a voltage between them can be at least one from among a melting vessel for melting glass starting materials to prepare molten glass, a clarifying vessel for clarifying the molten glass, and an operating vessel for homogenizing the molten glass that has been clarified. From the perspective of inhibiting coloration, at least the melting vessel for molding the glass starting materials to prepare molten glass is desirably a container that is paired with an electrode to apply a voltage between them. To thoroughly inhibit coloration, in addition to the melting vessel, at least either the clarifying vessel or the operating vessel is desirably a container that is paired with an electrode to apply a voltage between them. Most preferably, the melting vessel, clarifying vessel, and operating vessel are all containers that are paired with electrodes to apply voltages between them. These multiple containers desirably have approximately equal potentials. When multiple anodes are employed, it is desirable that the electricity passes between the multiple anodes and the anodes are of approximately equal potential.

The noble metal is not limited in terms of its composition. However, it is desirably corroded little by the glass; that is, tends not to undergo ionization. The standard electrode potential of the noble metal is desirably greater than the standard electrode potential of the metal ions in the molten glass. The lower limit of the standard electrode potential is desirably 0 V, preferably 0.5 V, more preferably 0.8 V, still more preferably 0.9 V, yet still more preferably 1.0 V, even more preferably 1.1 V, yet even more preferably 1.2 V, and yet still even more preferably, 1.3 V. The upper limit of the standard electrode potential of the noble metal or noble metal alloy is not specifically limited. However, 5 V or lower can serve as a yardstick.

When employing a container made of a platinum alloy, for example, a platinum alloy with a platinum content of from 1 weight % or more to less than 100 weight % can be employed. Examples of the component of the platinum alloy other than platinum are gold, palladium, iridium, silver, osmium, rhodium, ruthenium, and rhenium. To the extent that the effect of the present invention is not lost, an alloy that has been mechanically strengthened by the incorporation of a metal oxide or the like can be employed. The component ratio of the alloy is established so that the alloy has a standard electrode potential that is lower than that of the material constituting the anode and has a heat resistance temperature that is higher than the melting temperature of the glass. Further, when the standard electrode potential of the alloy approaches the standard electrode potential of the material constituting the anode, the permissible range of the voltage that is applied between the anode and cathode becomes narrow, which is undesirable in terms of stably manufacturing high-quality glass. Accordingly, to facilitate adjustment of the applied voltage, the component ratio of the alloy is desirably established by taking into account the relation to the standard electrode potential of the anode material. However, as a yardstick, the platinum content is desirably 50 weight % or greater but not greater than 99 weight %, preferably 60 weight % or greater but not greater than 98 weight %, more preferably 70 weight % or greater but not greater than 97 weight %, and still more preferably, 80 weight % or greater but not greater than 96 weight %.

The molten glass that is contained in the container made of a noble metal can be obtained by heating glass starting materials that have been charged to the container to melt them. The glass starting materials can be cullet starting materials, or unvitrified starting materials (batch starting materials). However, in terms of inhibiting corrosion of the container, cullet starting materials are desirable. The temperature of the molten glass is not specifically limited; a temperature that is suited to the glass composition can be employed. For example, a temperature falling within a range of 800°C to 1,600°C can be employed, and a temperature falling within a range of 800°C to 1,200°C is desirable. However, there is no intent to limit the temperature to within this range.

### (ii) Electrodes (anodes) of noble metals of high standard electrode potentials

An electrode made of a metal of higher standard electrode potential than the noble metal container set forth above, such as an electrode made of gold or a gold alloy, is immersed in the molten glass in the container.

The composition of the noble metal is not limited. However, to keep ΔP within the range of the difference in standard electrode potential with the electrode, described further below, the above standard electrode potential is noble rather than the standard electrode potential of the container, that is, its value is higher than the standard electrode potential of the container. Accordingly, denoting the desirable potential as the potential difference with the standard electrode potential of the container, relative to the standard electrode potential of the container, it exceeds +0 V, is desirably +0.001 V or more, is preferably +0.01 V or more, is more preferably +0.03 V or more, is still more preferably +0.05 V or more, is yet still more preferably +0.1 V, is even more preferably + 0.2 V, is still even more preferably +0.3 V or more, is yet still even more preferably +0.4 V or more, and is most preferably +0.5 V or more. There is no desirable upper limit to the potential difference, but 2 V or lower can serve as a yardstick.

Application of the voltage promotes ionization of the anode itself. Thus, the anode that is brought into contact with the molten glass in the container desirably undergoes little corrosion due to the glass, that is, desirably tends not to ionize. The standard electrode potential of the material constituting the anode is desirably of higher standard electrode potential than the metal ions in the molten glass. The lower limit of the standard electrode potential is desirably 0.5 V, preferably 0.8 V, more preferably 0.9 V, still more preferably 1.0 V, yet still more preferably 1.1 V, even more preferably 1.2 V, yet even more preferably 1.3 V, and yet still even more preferably, 1.4 V. The lower limit of the standard electrode potential grows in desirability as it increases from 1.5 V, 1.6V and 1.7 V, with 2.0 V or higher being particularly desirable. The upper limit of the standard electrode potential of the material constituting the anode is not specifically limited. However, 5 V or lower can serve as a yardstick. The material of the anode is desirably selected such that ions from the anode do not mix into the glass and aggravate coloration of the glass.

The greater the difference in the standard electrode potential between the container and the anode, the greater the anti-corrosion effect on the container. However, attempting to increase the potential difference by just lowering the standard electrode potential of the container is undesirable in that it increases the tendency of the container to be ionized by the glass and increases the tendency of the container to be corroded by the glass. Thus, from such perspectives, the standard electrode potential of the container is also desirable to be raised. The maximum difference in standard electrode potential is +0.5 V, desirably +0.4 V, preferably +0.3 V, more preferably +0.2 V, and still more preferably, +0.1 V.

One example of the metal constituting the electrode is an alloy with a gold content of 1 weight % or more. The gold content desirably falls within a range of 1 weight percent or more and less than 100 weight %. As a yardstick, the gold content is desirably 50 weight % or more and 99 weight % or less, preferably 60 weight % or more and 98 weight % or less, more preferably 70 weight % or more and 97 weight % or less, and still more preferably, 80 weight % or more and 96 weight % or less. Examples of components other than gold in the gold alloy are platinum, palladium, iridium, silver, osmium, rhodium, ruthenium, and rhenium. To the extent that the effect of the present invention is not compromised, the above alloys that have been mechanically strengthened by incorporating a metal oxide or the like can be employed. However, a gold alloy desirably does not contain platinum.

Neither the shape, area, nor mounting site of the electrode is specifically limited. However, from the perspective of permitting the application of an adequate voltage, the surface area of the electrode is desirably 1/1,000,000 or more, preferably 1/100,000 or more, more preferably 1/10,000 or more, still more preferably 1/1,000 or more, and yet still more preferably, 1/100 or more, the area of the container. To inhibit stress generated in the electrode by stirring of the glass or the flow of the glass, the electrode is desirably disposed in a position where the flow of the glass is gentle. Alternatively, it can be disposed concentrically with the center of rotation of the stirring rod so as not to impede stirring of the glass.

### (iii) The application of the voltage

A direct-current voltage is applied between the container (cathode) made of a noble metal of lower standard electrode potential (less precious noble metal) and the electrode (anode) of a noble metal of higher standard electrode potential (more precious noble metal). The voltage applied is desirably controlled so that the current flowing between the cathode and anode essentially goes to zero.

The voltage is applied so as to eliminate the electromotive force produced by the difference in the standard electrode potential between the less precious noble metal and the more precious noble metal. The voltage is also desirably applied so that the current flowing between the cathode and anode essentially goes to zero. A current density of 100 mA/cm² or lower at the cathode among the cathode and anode between which the current is flowing can serve as a yardstick for the current essentially going to zero. From the perspective of preventing coloration, the current density at the cathode is desirably 10 mA/cm² or lower, preferably 1 mA/cm² or lower, more preferably 0.1 mA/cm² or lower, and still more preferably, 0.01 mA/cm² or lower. To that end, the current flowing between the two electrodes is desirably monitored and a mechanism for controlling the voltage applied to the two electrodes is desirably employed so that the absolute value of the current is kept at or below a prescribed value. The electromotive force that is generated between the container and the electrode is determined by the respective compositions of the container, the electrode, and the molten glass, by the temperature of the molten glass, and the like. The voltage to be applied is suitably adjusted based on the magnitude of the electromotive force.

Although also depending on the alloy components, gold or a gold alloy (referred to as a "gold-based material" hereinafter) generally has a higher standard electrode potential than platinum or a platinum alloy (referred to as a "platinum-based material" hereinafter). Accordingly, when an electrode made of a gold-based material and an electrode made of a platinum-based material are immersed in molten glass and an electrical short-circuit is produced with the two electrodes, causing current to flow from the electrode made of the gold-based material (more precious noble metal) to the electrode made of the platinum-based material (less precious noble metal), corrosion of the platinum-based material ends up being promoted. Conversely, when a voltage is applied so that the potential of a material of high standard electrode potential, such as a gold-based electrode, becomes higher than that of an electrode of a material of low standard electrode potential, such as an electrode of a platinum-based material, the anode melts in the glass, compromising the internal quality of the glass, or a cathode reaction causes at the anode such as atomization of anions, reducing high refractive index components and causing the glass to develop marked coloration.

In the above form, the voltage is applied between the two electrodes so as to eliminate the potential difference between the electrode comprised of a gold-based material and the electrode comprised of a platinum-based material. That is, by effecting controls to render the potentials of the two electrodes essentially equal, ionization of the platinum is inhibited, the service lifetime of the container is extended, and contamination of the glass material with platinum is prevented. Coloration of the glass by Bi, Ti, Nb, and W can also be prevented.

With the exception of the application of the voltage, the method for manufacturing an optical glass of the present invention can be implemented based on the usual melting method. For example, compound starting materials corresponding to the various components are weighed out so as to yield a glass of desired composition and thoroughly stirred to obtain a mixed starting material. The mixed starting material is charged to a crucible and melted for 0.5 to 4 hours while being stirred at 1,100 to 1,200°C. The glass melt is then caused to flow out into a prescribed container, cooled, and pulverized to obtain cullets.

The cullets are then introduced into a container made of a noble metal, and, for example, heated to from the liquidus temperature (LT) to 1,200°C, stirred, and melted. Next, the molten glass is clarified at from the liquidus temperature (LT) to 1,200°C over 0.5 to 6 hours. Following clarification, the temperature of the glass is lowered from the clarification temperature to between the liquidus temperature (LT) and 1,100°C, desirably to between the liquidus temperature (LT) and 1,080°C, preferably to between the liquidus temperature (LT) and 1,050°C, more preferably to between the liquidus temperature (LT) and 1,020°C, and still more preferably, to between the liquidus temperature (LT) and 1,000°C. Subsequently, the molten glass is caused to flow out through a pipe connected to the bottom of the crucible, or is cast into a casting mold and molded, yielding an optical glass. The above temperature conditions and the time required for each step can be suitably adjusted.

Multiple types of cullets of differing optical characteristics can be prepared by the method set forth above and the cullets can be blended to obtain desired optical characteristics, melted, clarified, and molded to prepare an optical glass.

### <The method for manufacturing a glass material for press molding>

The present invention includes a method for manufacturing a glass material for press molding comprising manufacturing a glass by the method of the present invention set forth above, and manufacturing a glass material for press molding by using the glass obtained.

For example, the glass starting materials are melted, clarified, and homogenized by the method of the present invention, the molten glass obtained is caused to flow out through a pipe, continuously caused to flow into casting molds and molded, and the molded glass members obtained are annealed and then cut. The cut molded glass members are divided into multiple pieces of glass, ground, and polished to prepare glass materials for precision press molding, that is, preforms for precision press molding.

Alternatively, the multiple glass pieces can be barrel polished to obtain press molding-use glass materials for the press molding of polishing-use press-molded articles such as optical element blanks.

### <The method for manufacturing an optical element>

The present invention includes a method for manufacturing an optical element comprising manufacturing glass by the method of the present invention set forth above and manufacturing an optical element by using the glass obtained.

For example, the aforementioned glass material for precision press molding (preform for precision press molding) can be heated and precision press molding can be conducted with a pressing mold to manufacture an optical element.

Further, glass can be manufactured by the method of the present invention and the glass obtained can be ground and polished to manufacture an optical element.

The glass material for press molding can be heated to soften and press molded to manufacture an optical element blank. The optical element blank can then be ground and polished to manufacture an optical element.

Further, glass starting materials can be melted, clarified, and homogenized by the method of the present invention, the molten glass obtained can be caused to flow out above a pressing mold, the front end of the molten glass flowing out can be separated to obtain a molten glass gob on the pressing mold, and the molten glass gob can be press molded to manufacture an optical element blank. The optical element blank can then be ground and polished to manufacture an optical element.

Specific examples of the above optical element are lenses such as aspherical lenses, spherical lenses, plano-concave lenses, plano-convex lenses, bi-concave lenses, bi-convex lenses, convex meniscus lenses, and concave meniscus lenses; various lenses such as microlenses, lens arrays, and lenses with diffraction gratings; prisms; and prisms with lens functions. As needed, antireflective films, partial antireflective films with wavelength selectivity, and the like can be provided on the surface.

### [Embodiments]

The present invention will be described in greater detail below based on embodiments.

### Embodiment 1

Reduction in the quantity of Pt leaching out of the crucible by controlling the potentials of the various materials affecting dissolution was verified as follows.

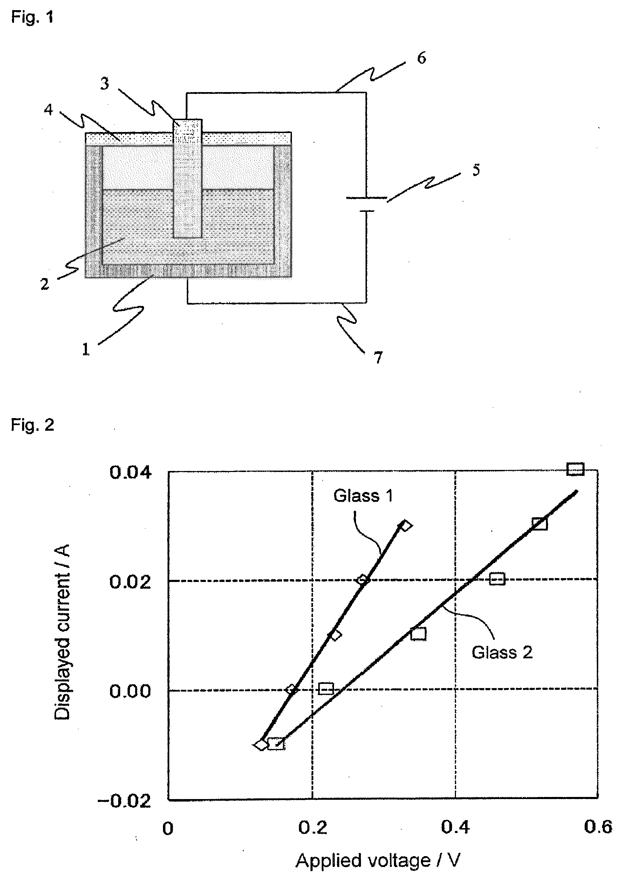

Employing a platinum (Pt) crucible as the melting container, 300 g each of molten oxide glass (all anions were O²⁻) comprising the cation percentages of Glass 1 and Glass 2 indicated in Table 1 were poured out, a gold (Au) electrode was inserted to prepare a test cell Au / glass melt / Pt permitting the application of a voltage under high temperature conditions, and melting was conducted at 1,020°C. Figure 1 shows a schematic vertical sectional view of the cell that was prepared. In Figure 1, a glass melt 2 is accumulated in Pt crucible 1 and an electrode 3 made of gold (Au) is immersed in glass melt (molten glass) 2. A cover in the form of an insulating member 4 is positioned on crucible 1. Insulating member 4 functions both as the cover of the crucible and to hold electrode 3. The plus(+) side output terminal of a direct current power source 5 is connected electrically to electrode 3 by a wire 6, and the minus(-) side output terminal of the direct current power source is connected electrically to container 1 by a wire 7. The potential difference (voltage) between container 1 and electrode 3 is measured by a voltmeter, not shown, and the currents flowing through wire 6 and wire 7 are measured with an ammeter, not shown.

The ionization tendencies of the electrode and crucible when no external voltage is applied to the cell can be estimated from the difference in the standard electrode potentials in water. That is, on the Pt crucible side serving as the negative electrode, the following equilibrium reaction takes place on the right side, and at the Au electrode, the following equilibrium reaction takes place on the left side, which are thought to cause the leaching out of Pt ions into the melt.

Pt electrode: Pt(S) <=> Pt²⁺ + 2e⁻
Au electrode: Au(S) <=> Au³⁺ + 3e⁻

The minus(-) terminal of the direct current power source was connected to the Pt electrode and the plus(+) terminal was connected to the Au electrode and a voltage was applied to control ionization of the Au electrode and Pt electrode in the above reactions. Figure 2 (the y-axis shows the current flowing between the crucible (container) and the anode; the x-axis shows the voltage applied between the crucible and the anode) shows the relation between the applied voltage and the current. Based on these test results, a current value of 0.0 A was exhibited in the vicinity of an applied voltage of 0.2 V. In a state of application of such a potential, of the above two equilibrium reactions, the equilibrium reaction at the Au electrode proceeded forcefully to the right side and the equilibrium reaction on the Pt electrode side proceeded forcefully to the left side, inhibiting the ionization reaction of Pt in the equilibrium reaction at the Pt electrode and presumably reducing the amount of Pt leaching out.

The applied voltage was optimized based on such test results. While applying a voltage of 0.21 V between the Pt crucible and the Au electrode in Glass 1 and a voltage of 0.18 V in Glass 2, the glasses were melted at 1,020°C, clarified, and homogenized. The molten glasses obtained were then molded to prepare optical glasses comprised of the above oxide glasses.

### Embodiment 2

### The relation between the melting time and the transmittance

Employing cullets of Glass 1, tests were conducted for a state exhibiting a current value of 0 A for melt holding times of 2 hours, 4 hours, and 8 hours (at a melting temperature of 1,020°C). The melt holding time was comprised of three steps in the form of a melting time, a voltage application time, and a stirring time. The melting time was a step in which glass cullets or starting materials (cullets here) were melted without immersing the Au electrode or applying a voltage, and ran for 30 minutes from the start of melting. The stirring time was a step in which glass to which a voltage was being applied was stirred and homogenized. Here, it ran for the 30 minutes from 30 minutes prior to the end of melting to the end of melting. The voltage application time was a step in which the Au electrode was actually immersed in the glass and a voltage was applied. Thus, the voltage application time = the melt holding time - the melting time - the stirring time = the melting holding time - 1 (hour). The transmittance characteristics of the glass blocks obtained in the various melting tests were measured. Figure 3 shows the spectral transmittance curves, and Table 2-A shows the melting times and A5 and A70 of glasses obtained with and without the application of voltages. For comparison, a Pt crucible of identical volume was employed and the differences between the A5 and A70 of glasses in which the melt holding times were varied from 2 hours, 4 hours, and 8 hours without immersion of the Au electrode and without voltage application for the voltage application times were recorded with the λ5 and A70 of glasses obtained applying voltages. Similarly, a test was conducted on Glass 2 for a melt holding time of 4 hours in a state in which a current value of 0 A was exhibited, and the transmittance characteristics were compared with those of a glass obtained with a melt holding time of 4 hours without voltage application and immersion of the Au electrode.

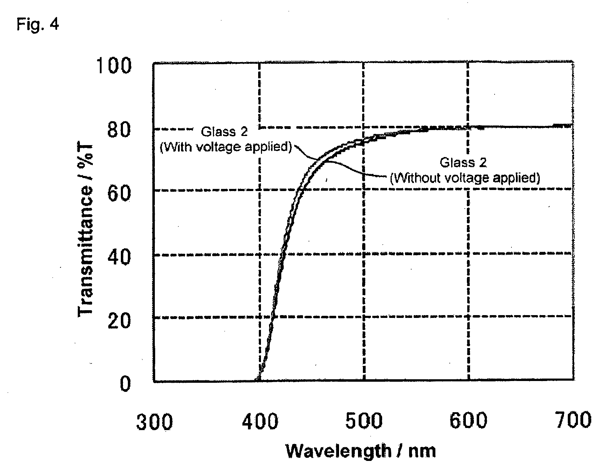

Figure 4 shows the spectral transmittance curves of the Glass 2 obtained in the above tests. Table 2-B shows the A70, A5, and melting times.

[Table 1]

**Table 1**

| | Glass 1 | Glass 2 |
|---|---|---|
| P⁵⁺ (cation %) | 28 | 28 |
| B³⁺ (cation %) | 2 | 2 |
| Si⁴⁺ (cation %) | 1 | 0 |
| Li⁺ (cation %) | 0 | 7 |
| Na⁺ (cation %) | 0 | 11 |
| K⁺ (cation %) | 0 | 2 |
| Ba²⁺ (cation %) | 3 | 1 |
| Bi³⁺ (cation %) | 25 | 21 |
| Ti⁴⁺ (cation %) | 21 | 4 |
| Nb⁵⁺ (cation %) | 20 | 20 |
| W⁶⁺ (cation %) | 9 | 4 |
| Total (cation %) | 100 | 100 |
| Bi³⁺ + Ti⁴⁺ + Nb⁵⁺ + W⁶⁺ (cation %) | 75 | 49 |
| Sb₂O₃ (wt. %)(note) | 0.05 | 0.1 |
| nd | 2.10 | 2.00 |
| vn | 17 | 19 |

| | | |
|---|---|---|
| (Note) The quantity of Sb₂O₃ added is based on the total amount of the glass components. | | |

[Table 2]

**Table 2-A**

| Melt time period | Application of voltage | A5 [nm] | Difference of λ5 [nm] | λ70 [nm] | Difference of λ70 [nm] |
|---|---|---|---|---|---|
| 2 hours | no | 418 | | 490 | |
| | yes | 418 | 0 | 481 | -9 |
| 4 hours | no | 419 | | 509 | |
| | yes | 418 | -1 | 497 | -12 |
| 8 hours | no | 420 | | 518 | |
| | yes | 419 | -1 | 502 | -16 |

**Table 2-B**

| Melt time period | Application of voltage | A5 [nml] | Difference of λ5 [nm] | A70 [nm] | Difference of λ70 [nm] |
|---|---|---|---|---|---|
| 4 hours | no | 403 | | 467 | |
| | yes | 402 | -1 | 458 | -11 |

As indicated by the above transmittance measurement results, the application of a voltage caused the A70 value to shift to the short wavelength side, and improved coloration relative to when no voltage was applied. Thus, the suitable application of a voltage inhibited the deterioration of transmittance (coloration) attributed to the leaching out of Pt and Au, and inhibited the deterioration of transmittance (coloration) attributed to the reduction of Bi, Ti, Nb, and W, making it possible to achieve the desired coloration-inhibiting results.

The A70 is the wavelength at which light ray transmittance within the wavelength range of 280 to 700 nm reaches 70%. The A5 is the wavelength at which the light ray transmittance within the wavelength range of 280 to 700 nm reaches 5%. Here, the light ray transmittance refers to lout/lin, when the spectral transmittance of light entering in a direction perpendicular to the polished surface, that is, the intensity of the light entering the sample, is denoted as lin, and the intensity of the light passing through the sample as lout, employing a glass sample having mutually parallel surfaces polished to a thickness of 10.0 ± 0.1 mm. The spectral transmittance includes losses due to light reflecting off the sample surface. The above "polishing" means smoothing to a state of adequately low surface roughness relative to the wavelengths of the measured wavelength region.

### Comparative Example 1

### Varying the potential (voltage)

For Glass 1, melting was conducted under conditions of 1,020°C for 4 hours in a state in which a current was generated (a state in which an oxidation-reduction reaction was anticipated) by varying the voltage from the voltage (ΔP = 0.21 V) at which a current of 0 A was exhibited. Changes in transmittance were evaluated in this process. The same crucible and anode as in Embodiments 1 and 2 were employed. The values of the voltage applied, the current value, λ5, and λ70 are given in Table 3. In Table 3, "no" in the column "Application of voltage" indicates data for the case where testing was conducted without employing a gold (Au) electrode, and "yes" in the column "Application of voltage" indicates data for the case where testing was conducted by immersing a gold (Au) electrode in the glass melt.

[Table 3]

**Table 3**

| Voltage applied (V) Current value (A) | Application of voltage | A5 [nm] | Difference of A5 [nm] | λ70 [nm] | Difference of λ70 [nm] | Pt concentration (ppm) | Au concentration (ppm) |
|---|---|---|---|---|---|---|---|
| 0.46 | no | 419 | | 506 | | 1.6 | <0.1 |
| 0,02 | yes | 420 | +1 | >>700 | >>+194 | 0.96 | 30 |
| (0.21) | no | (419) | | (509) | | | |
| (0.00) | yes | (418) | -1 | (497) | (-12) | 1.1 | 14 |
| 0.00 | no | 419 | | 505 | | | |
| -0.02 | yes | 419 | 0 | 508 | +3 | 2.2 | 2.8 |

| | | | | | | | |
|---|---|---|---|---|---|---|---|
| (Note) The numbers within ( ) in Table 3 are values obtained in Embodiment 2. | | | | | | | |

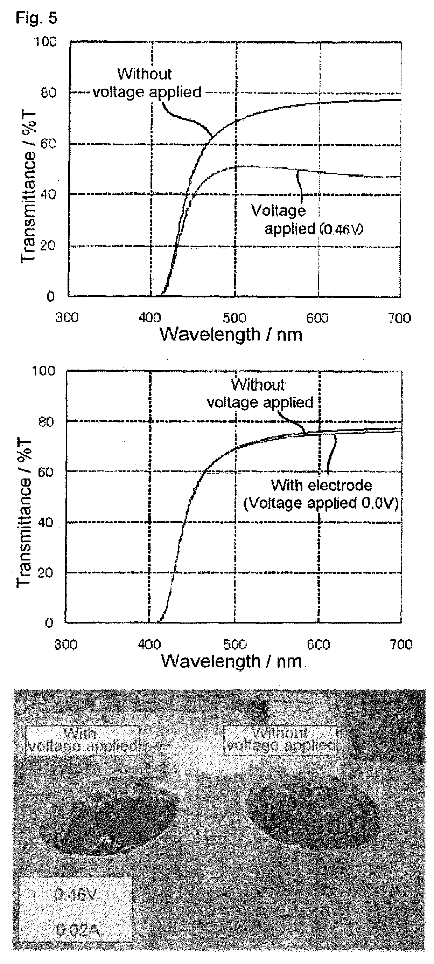

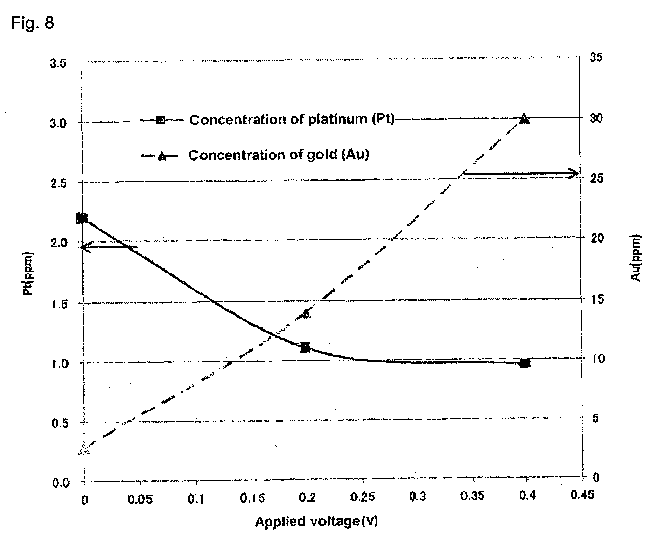

Figure 5 shows the results of transmittance measurement of various glasses prepared by varying the voltage applied. The appearance (photograph) of the melts immediately following the end of voltage application are also shown in Figure 5. Based on these results, at an applied voltage of 0.46 V (with a current of 0.2 A) exceeding 0.21 V, glass coloration deteriorated markedly and the maximum transmittance of the glass dropped to below 70%, making it impossible to obtain λ70 data. Additionally, at an applied voltage of 0 V (with a current of -0.2 A), that is, when a short circuit was created between the crucible and anode, no improvement in transmittance was observed. Due to these tests, the platinum (Pt) concentration and gold (Au) concentration in the glasses obtained were measured. Table 3 gives the measurement results. Figure 8 gives the relation between the applied voltage and the platinum (Pt) concentration and gold (Au) concentration when the applied voltage was varied with a gold (Au) electrode immersed in the glass melt. In Figure 8, the x-axis denotes the applied voltage, the y-axis (left) denotes the platinum concentration, and the y-axis (right) denotes the gold concentration. Plot · denotes the platinum (Pt) concentration, and plot ▲ denotes the gold (Au) concentration.

### Embodiment 3

A Pt crucible was employed in the same manner as in Embodiments 1 and 2. A 300 g quantity of the melt of the same oxide glass as in Glass 1 employed in Embodiments 1 and 2 was poured into the Pt crucible. A Pt-Au alloy electrode was inserted to prepare a test cell of Pt-Au / glass melt / Pt to which a voltage could be applied under high-temperature conditions, and melting was conducted. The Pt-Au alloy was comprised of Pt: 95 weight % and Au: 5 weight %. The positive electrode was made of Pt-Au alloy, and the negative electrode was the Pt crucible. The potential difference between the Pt-Au alloy electrode and Pt crucible was 0.07 V. Next, The plus(+) side output terminal of a direct current power source was connected to the Pt-Au alloy electrode, the minus(-) side output terminal was connected to the Pt crucible, and a voltage ΔP was applied between the Pt-Au alloy electrode and the Pt crucible. Table 4 gives various values for the voltage applied, λ5, and λ70.

[Table 4]

**Table 4**

| Melting time period | Voltage applied (V) | λ5 [nm] | λ50 [nm] | λ70 [nm] |
|---|---|---|---|---|
| 4 hours | No electrode | 419 | 452 | 507 |
| | 0.05 | 419 | 450 | 513 |

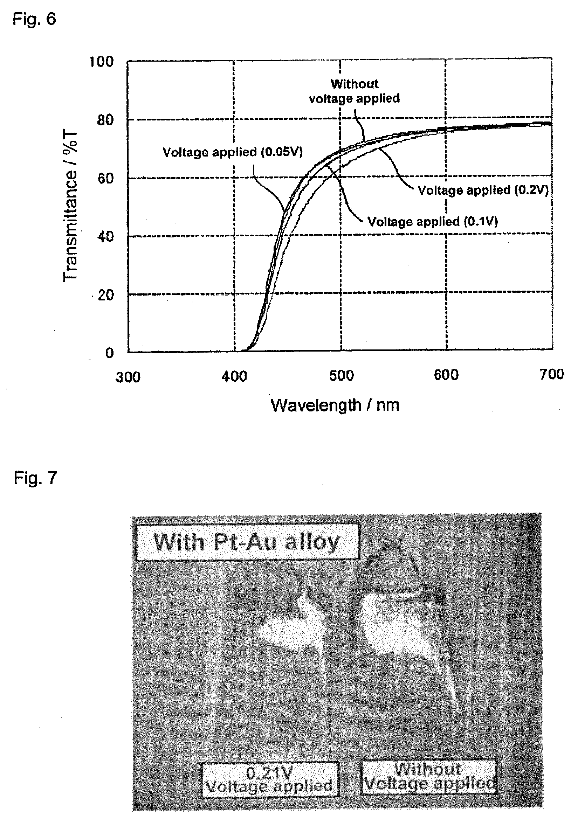

Figure 6 shows the spectral transmittance curve of the glass obtained.

When a voltage of 0.05 V was applied, the voltage was lower than the ΔP between the Pt-Au alloy electrode and Pt crucible. Thus, the value of the wavelength λ50 at which an external transmittance of 50% was exhibited shifted to the short wavelength side relative to when there was no electrode, suggesting an increase in transmittance. (However, in the present embodiment, although the λ70 of the glass to which the voltage was applied was on the long wavelength side relative to when there was no electrode, in the above-mentioned case of the glass in which the λ50 was on the short wavelength side, changes in the oxidation-reduction state due to adequate homogenization and annealing of the glass sometimes caused the A70 to shift to the short wavelength side, so no determination of the quality of λ70 could be made.)

### Comparative Example 2

The same Glass 1, Pt-Au alloy electrode, and Pt crucible were employed as in Embodiment 3 (the potential difference between the Pt-Au alloy electrode and the Pt crucible was 0.07 V) and the applied voltage was set to 0.10 V. In this case, the ionization-inhibiting effect of the elemental Pt on the crucible side was greater than in the case of the applied voltage of 0.05 V of Embodiment 3. The promoting effect on ionization of the elemental Pt on the electrode side was increased. As a result, coloration deteriorated markedly. When an applied voltage of 0.21 V was employed, since the voltage was higher than the ΔP between the Pt-Au alloy electrode and the Pt crucible, the coloration deteriorated due to the applied voltage, as is shown in Table 5 and Figures 6 and 7. It became impossible to achieve the desired improving effect on coloration with the application of a potential that was greater than ΔP in this manner, in a state where oxidation of the metal serving as the anode was promoted. Alternatively, in a state in which the difference in the standard electrode potential of the cathode and anode was excessively small, it was also impossible to adequately inhibit ionization of the elements constituting the crucible, the corrosion of which was desirably to be prevented.
[Table 5]

**Table 5**

| Melting time period | Voltage applied (V) | λ5 [nm] | λ50 [nm] | λ70 [nm] |
|---|---|---|---|---|
| 4 hours | No electrode | 419 | 452 | 507 |
| | 0.10 | 419 | 456 | 519 |
| | 0.21 | 422 | 467 | 542 |

### Embodiment 4

Glasses identical to the melted glasses in Embodiments 1 and 2 were prepared by the same method as the method with the confirmed coloration-improving effect of Embodiments 1 and 2. Molded glass members comprised of these glasses were prepared, and these molded members were processed to prepare glass materials for press molding made of optical glass. The glass materials obtained were heated, softened, and press molded to prepare optical element blanks. The optical element blanks were ground and polished to prepare various optical elements such as lenses and prisms.

The surfaces were polished, the glass materials for press molding were heated and softened, and precision press molding was conducted to prepare various optical elements such as aspherical lenses.

It was possible to form coatings such as antireflective films as needed on the surfaces of the optical elements obtained.

### Embodiment 5

Glass 3 shown in Table 6 was prepared by the same procedure as in Embodiments 1 and 2. The same crucible and anode materials were employed as in Embodiments 1 and 2. Oxides and boric acid corresponding to the various components were employed as starting materials. The various starting materials were weighed out to yield the composition indicated in Table 6 following vitrification, thoroughly mixed, melted at a temperature of 850 to 1,000°C, clarified, and homogenized, and then cast into a preheated metal mold. Since the potential difference ΔP between the Pt crucible and the Au anode was 0.2 V, within the glass melt, a voltage of 0.2 V was applied between the Pt crucible and Au anode to achieve a current of 0 A flowing between the crucible and the anode. This current was maintained in a state of 0 A. Table 6 gives the characteristics of the glass 3 obtained. Compared to when the anode was not immersed in the molten glass, glass 3 exhibited a λ70 value that was shifted to the short wavelength side, achieving a coloration-inhibiting effect.

[Table 6]

**Table 6**

| | Glass 3 |
|---|---|
| Bi³⁺ (cation %) | 55 |
| B³⁺ (cation %) | 25 |
| Si⁴⁺ (cation %) | 10 |
| Al³⁺ (cation %) | 10 |
| Total (cation %) | 100 |
| Bi³⁺ + Ti⁴⁺ + Nb⁵⁺ + W⁶⁺ (cation %) | 55 |
| nd | 2.11057 |
| vd | 16.97 |
| Liquidus temperature (°C) | Not greater than 680 |
| Glass transition temperature (°C) | 401 |
| Specific gravity | 6.83 |

A molded glass member comprised of glass 3 was prepared in this manner. The molded member was processed to prepare a glass material for press molding made of optical glass. The glass material obtained was heated, softened, and press molded to prepare an optical element blank. The optical element blank was ground and polished to prepare various optical elements such as lenses and prisms.

The surface was polished and the glass material for press molding was heated, softened, and precision press molded to prepare various optical elements such as aspherical lenses.

It was possible to coat antireflective films as needed on the surface of the optical elements obtained.

### [Industrial Applicability]

The present invention is useful in the field of glass manufacturing, particularly in the field of optical glass manufacturing.

### [Key to the Numbers]

- 1: Pt crucible
- 2: Glass melt
- 3: Gold (Au) electrode
- 4: Insulating member
- 5: Direct current power source
- 6: Wire
- 7: Wire

## Claims

1. A method for manufacturing glass containing one or more components from among Bi³⁺, Ti⁴⁺, Nb⁵⁺, and W⁶⁺, comprising melting glass starting materials, **characterized in that** a molten glass is contained in a container having a surface coming into contact with the molten glass that is made of a noble metal or a noble metal alloy, the molten glass is brought into contact with an electrode, a potential is applied so that the electrode serves as an anode and the surface of the container coming into contact with the molten glass serves as a cathode, at least the surface of the electrode coming into contact with the molten glass is comprised of a noble metal or a noble metal alloy having a standard electrode potential greater than the standard electrode potential of the noble metal or noble metal alloy of the surface of the container, and a voltage is applied between the cathode and the anode, with the value of the potential at which the current flowing between the cathode and anode essentially goes to zero as the upper limit thereof, to inhibit corrosion of the surface of the container coming into contact with the molten glass.

2. The method for manufacturing glass according to claim 1, wherein the voltage is applied so that the current flowing between the cathode and anode essentially goes to zero.

3. The method for manufacturing glass according to claim 2, wherein the voltage is applied so that the current density, at the cathode, of the current flowing between the cathode and the anode becomes equal to or lower than 100 mA/CM².

4. The method for manufacturing glass according to any one of claims 1 to 3, wherein the container is at least one from among a melting vessel for melting glass starting materials to prepare molten glass, a clarifying vessel for clarifying molten glass, and an operating vessel for homogenizing the clarified molten glass.

5. The method for manufacturing glass according to any one of claims 1 to 4, wherein the total content of Bi³⁺, Ti⁴⁺ , Nb⁵⁺, and W⁶⁺ in the glass is equal to or greater than 10 cation %.

6. The method for manufacturing glass according to any one of claims 1 to 5, wherein the surface of the container coming into contact with the molten glass is made of platinum or a platinum alloy, and the surface of the electrode constituting the anode that comes into contact with the molten glass is made of gold or a gold alloy.

7. A method for manufacturing a glass material for press molding, comprising manufacturing glass by the method described in any one of claims 1 to 6, and manufacturing a glass material for press molding by using the glass obtained.

8. A method for manufacturing an optical element, comprising manufacturing glass by the method described in any one of claims 1 to 6, and manufacturing an optical element by using the glass obtained.

## Patentansprüche

1. Verfahren zur Herstellung von Glas, das eine oder mehrere Komponenten aus Bi³⁺, Ti⁴⁺, Nb⁵⁺ und W⁶⁺ enthält, das Schmelzen von Glasausgangsmaterialien umfasst, **dadurch gekennzeichnet, dass** ein geschmolzenes Glas in einem Behälter enthalten ist, der eine Oberfläche hat, die mit dem geschmolzenen Glas in Kontakt kommt, die aus einem Edelmetall oder einer Edelmetalllegierung hergestellt ist, das geschmolzene Glas mit einer Elektrode in Kontakt gebracht wird, ein Potential so angelegt wird, dass die Elektrode als Anode dient und die Oberfläche des Behälters, die mit dem geschmolzenen Glas in Kontakt kommt, als Kathode dient, wenigstens die Oberfläche der Elektrode, die mit dem geschmolzenen Glas in Kontakt kommt, aus einem Edelmetall oder einer Edelmetalllegierung mit einem Standardelektrodenpotential, das größer ist als das Standardelektrodenpotential des Edelmetalls oder der Edelmetalllegierung der Oberfläche des Behälters besteht, und eine Spannung zwischen der Kathode und der Anode angelegt wird, wobei der Wert des Potentials, bei dem der Strom, der zwischen der Kathode und der Anode fließt, im Wesentlichen nach null als die Obergrenze davon geht, um eine Korrosion der Oberfläche des Behälters, die in Kontakt mit dem geschmolzenen Glas kommt, zu hemmen.

2. Verfahren zur Herstellung von Glas gemäß Anspruch 1, wobei die Spannung so angelegt wird, dass der Strom, der zwischen der Kathode und der Anode fließt, im Wesentlichen nach null geht.

3. Verfahren zur Herstellung von Glas gemäß Anspruch 2, wobei die Spannung so angelegt wird, dass die Stromdichte, an der Kathode des Stroms, der zwischen der Kathode und der Anode fließt, gleich oder niedriger als 100 mA/cm² wird.

4. Verfahren zur Herstellung von Glas gemäß einem der Ansprüche 1 bis 3, wobei der Behälter wenigstens einer aus einem Schmelzgefäß zum Schmelzen von Glasausgangsmaterialien, um geschmolzenes Glas herzustellen, einem Klärgefäß zum Klären von geschmolzenem Glas und einem Arbeitsgefäß zum Homogenisieren des geklärten geschmolzenen Glases, ist.

5. Verfahren zur Herstellung von Glas gemäß einem der Ansprüche 1 bis 4, wobei der Gesamtgehalt an Bi³⁺, Ti⁴⁺, Nb⁵⁺ und W⁶⁺ in dem Glas gleich oder größer als 10 Kationen-Prozent ist.

6. Verfahren zur Herstellung von Glas gemäß einem der Ansprüche 1 bis 5, wobei die Oberfläche des Behälters, die mit dem geschmolzenen Glas in Kontakt kommt, aus Platin oder einer Platinlegierung hergestellt ist und die Oberfläche der Elektrode, die die Anode bildet, die in Kontakt mit dem geschmolzenen Glas kommt, aus Gold oder einer Goldlegierung hergestellt ist.

7. Verfahren zur Herstellung eines Glasmaterials zum Pressformen, umfassend Herstellen von Glas durch das in einem der Ansprüche 1 bis 6 beschriebenen Verfahren und Herstellen eines Glasmaterials zum Pressformen durch Verwendung des erhaltenen Glases.

8. Verfahren zur Herstellung eines optischen Elements, umfassend Herstellen von Glas durch das in einem der Ansprüche 1 bis 6 beschriebene Verfahren und Herstellen eines optischen Elements durch Verwendung des erhaltenen Glases.

## Revendications

1. Procédé de fabrication de verre contenant un ou plusieurs composants parmi Bi³⁺, Ti⁹⁺, Nb⁵⁺, et W⁶⁺, comprenant la fusion de matières de départ du verre, **caractérisé en ce qu'**un verre fondu est contenu dans un contenant ayant une surface venant en contact avec le verre fondu qui est constituée d'un métal noble ou d'un alliage de métal noble, le verre fondu est amené en contact avec une électrode, un potentiel est appliqué pour que l'électrode serve d'anode et que la surface du contenant venant en contact avec le verre fondu serve de cathode, au moins la surface de l'électrode venant en contact avec le verre fondu est composée d'un métal noble ou d'un alliage de métal noble ayant un potentiel standard d'électrode plus grand que le potentiel standard d'électrode du métal noble ou de l'alliage de métal noble de la surface du contenant, et une tension est appliquée entre la cathode et l'anode, la valeur du potentiel à laquelle le courant circulant entre la cathode et l'anode tendant essentiellement vers zéro en tant que borne supérieure, pour inhiber la corrosion de la surface du contenant venant en contact avec le verre fondu.

2. Procédé de fabrication de verre selon la revendication 1, dans lequel la tension est appliquée pour que le courant circulant entre la cathode et l'anode tende essentiellement vers zéro.

3. Procédé de fabrication de verre selon la revendication 2, dans lequel la tension est appliquée pour que la densité de courant, au niveau de la cathode, du courant circulant entre la cathode et l'anode devienne inférieure ou égale à 100 mA/cm².

4. Procédé de fabrication de verre selon l'une quelconque des revendications 1 à 3, dans lequel le contenant est au moins un élément parmi une cuve de fusion permettant de faire fondre des matières de départ du verre pour préparer du verre fondu, une cuve de clarification permettant de clarifier du verre fondu, et une cuve opérationnelle permettant d'homogénéiser le verre fondu clarifié.

5. Procédé de fabrication de verre selon l'une quelconque des revendications 1 à 4, dans lequel la teneur totale en Bi³⁺, Ti⁴⁺, Nb⁵⁺, et W⁶⁺ dans le verre est supérieure ou égale à 10 % des cations.

6. Procédé de fabrication de verre selon l'une quelconque des revendications 1 à 5, dans lequel la surface du contenant venant en contact avec le verre fondu est constituée de platine ou d'un alliage de platine, et la surface de l'électrode constituant l'anode qui vient en contact avec le verre fondu est constituée d'or ou d'un alliage d'or.

7. Procédé de fabrication d'une matière de verre pour le procédé pressé-moulé, comprenant la fabrication de verre par le procédé décrit dans l'une quelconque des revendications 1 à 6, et la fabrication d'une matière de verre pour le procédé pressé-moulé par l'utilisation du verre obtenu.

8. Procédé de fabrication d'un élément optique, comprenant la fabrication de verre par le procédé décrit dans l'une quelconque des revendications 1 à 6, et la fabrication d'un élément optique par l'utilisation du verre obtenu.
